# EUROPEAN PATENT APPLICATION

(11) **EP 2 564 980 A2**
(43) Date of publication of application: **06.03.2013**
(21) Application number: 12182069.0
(22) Date of filing: 28.08.2012
(51) Int. Cl.: B23P 6/00, C23C 24/08

(54) **Solid state system and method for refurbishment of forged components**

(30) Priority: 29.08.2011 US 201113219929
(71) Applicant: General Electric Company, Schenectady, NY 12345 (US)
(72) Inventor: Cretegny, Laurent, Niskayuna, NY New York 12309 (US); Carter, William Thomas, Niskayuna, NY New York 12309 (US); Ajdelsztajn, Leonardo, Niskayuna, NY New York 12309 (US)
(74) Representative: Williams, Andrew Richard

(57) **Abstract**

A system (100) and method for refurbishing forged components (50). The system includes an identification subsystem (110) for identifying a forged component for refurbishment, a removal subsystem (120) for removing portions (52) of the forged component, and a rebuilding subsystem (130) for rebuilding the forged component, the rebuilding subsystem including an assembly for adding a non-molten material to the forged component.

## Description

### FIELD

The invention relates to a system and method for refurbishment of forged components, and more particularly, to a solid state system and method for refurbishing forged components.

### BACKGROUND

Forged components are used in a myriad of different industrial applications. One example of a forged component is a gas turbine wheel. Another example of a forged component is a rotor. Through repeated use, such forged components as gas turbine wheels and rotors become worn, damaged, cracked, corroded or otherwise altered.

Gas turbine wheels and rotors experience numerous distress modes that lead to their premature or planned retirement. Some of these distress modes include mis-machining, corrosion, and fatigue cracking. Additionally, sometimes gas turbine wheels and rotors are transitioned out of service at an arbitrarily determined end of life per design practice. When a decision is made to replace a forged component, this leads to a very costly purchase of a replacement forged component. The replacement cost for forged components like gas turbine wheels and rotors may be $500,000 or more. Further, such replacement forged components may not be available immediately, and the replacement may have an associated lead time of as long as twelve to eighteen months. This lead time places a heavy burden on all parties involved, including the services and the new unit manufacturing organizations.

Formulating a methodology for lengthening the life of forged components will result in a significant cost savings. By refurbishing used forged components instead of replacing them, the cost differential between replacement and refurbishment is saved. Lengthening the life of forged components will also provide desired flexibility for the supply chain in that the lead time to refurbish is significantly less than the lead time required to replace. Finally, sales and marketing departments will gain from this methodology in that they will increase their offering options to customers.

Most conventional material deposition and/or additive processes are inapplicable for use with forged components. Some conventional processes, like thermal spraying, have inherent defects, such as excess porosity. Fundamentally, thermal spraying requires melting or partial melting of the particles being sprayed to produce a coating. The coating is formed incrementally into a lamellar structure.

Thermal sprays can have a porosity of from one to 25 percent. Porosity can be detrimental in coatings with respect to corrosion, machined finish, and strength, macro-hardness and wear characteristics. Other conventional processes do not meet the stringent mechanical properties requirements of forgings. Still other conventional processes, such as fusion processes, impart such an excessive amount of heat to forged component substrates that it alters the grain and strengthening phase structure of the substrates. This significantly reduces the fatigue life of such components. Plasma vapor deposition (PVD) and chemical vapor deposition (CVD) processes also have inherent limitations relative to deposition control and rate.

Conventional solid state joining processes, such as friction stir welding (FSW) and ultrasonic spot welding (USW) are also inapplicable. The tremendous size of the FSW tool severely restricts the accessibility of the tool to only the most open areas of a forged component and cannot be used to deposit material in intricate, hard to reach areas of a forged component, such as, for example, the bottom of a dovetail. Further, FSW and USW are techniques designed for joining two pieces together. Neither is particularly applicable for building up material. FSW and USW utilize friction to joint two pieces together, and loose material (such as a powder) cannot be firmly bonded to a substrate using these techniques. Other attempts, including brazing and cold spraying with a braze material have also met with failure.

With some of these concerns in mind, an improved system and method for the refurbishment and/or repair of forged components would be welcome in the art.

### SUMMARY

An embodiment of the invention includes a system for refurbishing forged components. The system includes an identification subsystem for identifying a forged component for refurbishment, a removal subsystem for removing portions of the forged component, and a rebuilding subsystem for rebuilding the forged component. The rebuilding subsystem including an assembly for adding a non-molten material to the forged component.

An embodiment of the invention includes a method for refurbishing forged components. The method includes identifying a forged component for refurbishment, removing a portion of the forged component, and rebuilding the forged component through the addition of non-molten material.

An embodiment of the invention includes a method for refurbishing forged components. The method includes identifying a forged component for refurbishment, removing a portion of the forged component, refurbishing the forged component through the addition of non-molten material, wherein the refurbishing comprises cold spraying, and performing post-processing on the refurbished forged component.

These and other features, aspects and advantages of the present invention may be further understood and/or illustrated when the following detailed description is considered along with the attached drawings.

### DESCRIPTION OF THE DRAWINGS

FIG. 1 is a schematic depiction of a solid state system for refurbishing a forged component in accordance with an embodiment of the invention.
FIG. 2 is a schematic depiction of a cold spraying assembly in accordance with an embodiment of the invention.
FIG. 3 is a schematic depiction of a pulsed cold spraying assembly in accordance with an embodiment of the invention.
FIG. 4 is a schematic depiction of a post-processing subsystem in accordance with an embodiment of the invention.
FIG. 5 is a graphical representation exhibiting percentages of cold work per depth for an alloyed metal sample in accordance with an embodiment of the invention.
FIG. 6(A) depicts the microstructure of an alloyed metal sample after cold spraying a material in accordance with an embodiment of the invention.
FIG. 6(B) depicts the microstructure of FIG. 6(A) after a post-processing step of hot isostatic pressing in accordance with an embodiment of the invention.
FIG. 6(C) depicts the microstructure of FIG. 6(B) after a post-processing heat treatment in accordance with an embodiment of the invention.
FIGS. 7(A) and (B) depict the microstructure of a tensile bar formed through cold spraying after having been fractured through tensile forces in accordance with an embodiment of the invention.
FIG. 8 depicts process steps for repairing a forged component in accordance with an embodiment of the invention.

### DETAILED DESCRIPTION

The present specification provides certain definitions and methods to better define the embodiments and aspects of the invention and to guide those of ordinary skill in the art in the practice of its fabrication. Provision, or lack of the provision, of a definition for a particular term or phrase is not meant to imply any particular importance, or lack thereof; rather, and unless otherwise noted, terms are to be understood according to conventional usage by those of ordinary skill in the relevant art.

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation.

The modifier "about" used in connection with a quantity is inclusive of the stated value and has the meaning dictated by the context (e.g., includes the degree of error associated with measurement of the particular quantity). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

The restoration and/or refurbishment of worn, damaged, cracked, corroded or otherwise altered forged components requires specific processing steps so as to recover near-parent metal properties without altering the surrounding substrate material. The processing steps include identification of specific forged components ready for refurbishment; removal of material from such identified forged components, be the removed material damaged or merely worn; depositing new material in a way that does not alter surrounding material; and, optionally, post-processing the added material.

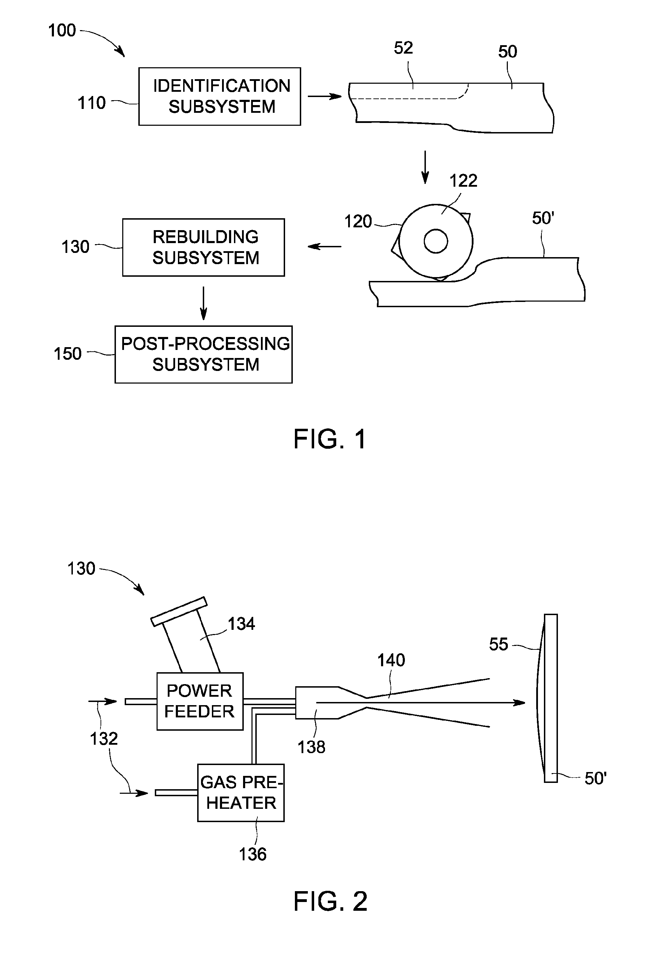

With specific reference to FIG. 1, a refurbishment system 100 is shown. The refurbishment system 100 includes an identification subsystem 110, a material removal subsystem 120, a rebuilding subsystem 130, and an optional post-processing subsystem 150.

The identification subsystem 110 performs identification functions for ascertaining which forged components, shown in FIG. 1 as forged component 50, within a working inventory are ready for or in need of refurbishment and/or repair. By "ready for" is meant that due to the length of its working life, a particular forged component may be scheduled to be refurbished. Further, "ready for" may also entail a visual inspection of a particular forged component, which reveals sufficient wear, corrosion, abrasion, etc. to warrant refurbishment. By "in need of" is meant that an inspection of a particular forged component has revealed damage, e.g., cracking, for which the forged component needs repair.

The identification subsystem 110 may take many forms. For example, the identification subsystem 110 may include one or more still or video cameras or the like to visually memorialize the condition of any particular forged component or portion thereof. Alternatively, the identification subsystem 110 may include non-destructive evaluation techniques such as inspection with loupes or optical microscopes, inspection with replicas which are then analyzed under a microscope, fluid penetrant inspection (FPI), eddy current, and/or ultrasonics.

Once a particular forged component has been identified through the identification subsystem 110, or through a normal refurbishment schedule, as being ready for or in need of refurbishment, the forged component 50 is transferred to the material removal subsystem 120. As shown in FIG. 1, the forged component 50 may have a portion 52 of its material that is identified as requiring removal. The material removal subsystem 120 serves to remove the portion 52 from the forged component 50, leaving a forged component with material removed 50'.

The material removal subsystem 120 may take a myriad of forms. The material removal subsystem 120 may include grinding and/or milling equipment to remove material 52. Care needs to be taken in the removal process so as not to impart excessive deformation or create discontinuities within the substrate 50, such as, for example, cracks. There may be instances where access to the area of removal is difficult, or where the amount of work being put into material removal should be minimized. In such instances, the material removal subsystem 120 may include electric-discharge (EDM) or electro-chemical machining (ECM) equipment. Such equipment may be combined with the grinding and/or milling equipment or may be in lieu of such equipment. In one embodiment, the material removal subsystem 120 includes electro-chemical grinding (ECG) equipment which includes an electrically conductive grinding wheel used to concurrently remove the material 52 and any recast layer. The recast layer is a thin layer (approximately 0.001 to 0.002 inches thick) that is left behind after a conventional EDM process. Through the EDM process, metal actually melts locally and re-solidifies, leaving behind a thin recast layer containing many oxides (from being exposed to air while molten). This is a surface condition that does not lend itselfto any good quality joining process.

In addition to, or in lieu of, ECG equipment, the material removal subsystem 120 may include an abrasive electrical discharge machine, an abrasive electro-chemical-discharge machine, and/or an abrasive waterjet machine for removing the material 52.

Once the material 52 has been removed, the forged component with material removed 50' may be transferred to a rebuilding subsystem 130. The rebuilding subsystem 130 includes equipment capable of performing a solid state material rebuild on the forged component 50'. A solid state material rebuild includes the addition of a non-molten material. Further, a solid state material rebuild does not cause any material in the forged component 50' surrounding the material addition site to become altered, such as melted.

The rebuilding subsystem 130 may include a cold spraying assembly, such as the one illustrated in FIG. 2. In the rebuilding subsystem 130 of FIG. 2, a pressurized gas 132 is introduced to a powder feeder 134 and a gas pre-heater 136. The pressurized gas entering the gas pre-heater 136 is heated to a temperature of typically from 300 to 800° C. The heated pressurized gas is then introduced to a powder pre-heat chamber 138. The pressurized gas 132 entering the powder feeder 134 picks up powder therein and transports it to the powder pre-heat chamber 138, where it is heated by the heated pressurized gas 132. Typical metal powders (pure metals like aluminum, copper, nickel, iron, cobalt, tantalum, niobium, or alloys of the same) are approximately 50 microns in diameter. The heated powder is then transported through a converging - diverging nozzle 140 and directed at the forged component with material removed 50' as new material 55. The new material 55 is non-molten material. This assembly allows for a high deposition rate, a low heat input to the forged component substrate, and excellent control of the chemistry of the material being deposited. These attributes lead to a final microstructure that is dense and for the most part free of defects.

Use of a convergent-divergent nozzle 140 and hot gases 132 to accelerate powder particles to supersonic velocities imparts a high amount of kinetic energy to the particles. This allows for a high bonding affinity between the particles and the forged component substrate 50' at temperatures lower than traditional material additive methods such as welding, cladding, and thermal spraying.

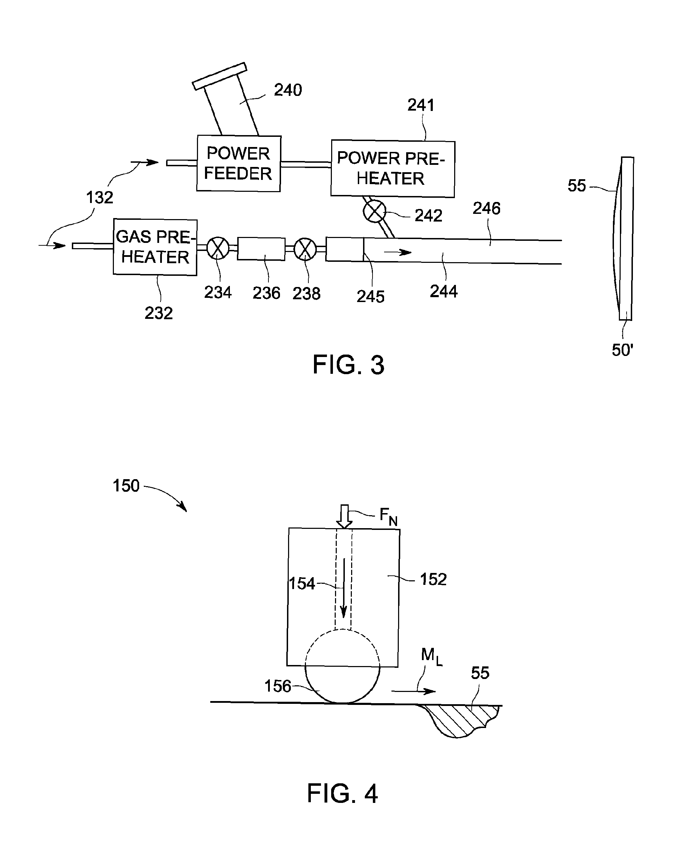

Alternatively, the rebuilding subsystem 130 may include a pulsed cold spraying assembly, such as the pulsed cold spraying assembly illustrated in FIG. 3. A high pressurized gas 132 is introduced to the rebuilding subsystem 130 through a gas heater 232. The heated gas then is transmitted through a first valve 234 to a driver section 236 and then through a second valve 238 to a driven section 244. The high pressure gas 132 is also introduced, along with powder from a hopper 240, to a powder pre-heater 241. The heated powder-gas mixture is introduced through a third valve 242 to the driven section 244. The high pressure gas 132 entering the driven section 244 through the second valve 238 forms a shockwave 245 upstream from where the heated powder-gas mixture enters the driven section. The shockwave 245 assists in propelling the heated powder through the driven section 244 to and through a nozzle 246 to the forged component with material removed 50' forming new material 55. The pulsed cold spraying assembly allows for a high deposition rate, a low heat input to the forged component substrate, and excellent control of the chemistry of the material being deposited. These attributes lead to a final microstructure that is dense and for the most part free of defects. Further, the pulsed cold spraying assembly may utilized a bent nozzle 246 to reach hard-to-reach areas of a component for refurbishment with the combination of pressurized gas 132 and heated powder.

While cold spraying techniques are illustrated and described, it should be understood that other solid state material deposition techniques that generate high quality deposition while imparting low heat in the forged component substrate may be utilized. For example, electro-spark deposition (ESD), powder-micro-spark deposition (PMSD), cold metal transfer, or other like techniques may be used to deliver material that is identical in chemical composition to the substrate of the forged component being refurbished.

In certain instances, it may be necessary to process the additional material. Thus, after the rebuilding subsystem 130, the newly refurbished forged component may be transferred to a post-processing subsystem 150. The post-processing subsystem 150 is configured to impart plastic deformation to the newly added material 55. The newly added material 55 deposited through cold spraying has a near defect free structure. However, such newly added material 55 has pores and may lack bonds or have insufficient bonds between particles. Further, while the bonding of the newly added material 55 to the original forged component substrate 50' is metallurgical in nature - the bonding forces are generated at atomic levels and are not due to mechanical bonding from asperities and/or other surface roughness features - there exists a continuous boundary between the original forged component substrate 50' and the newly added material 55. The continuous boundary includes an uninterrupted series of grain boundaries which propagate a weakness in the structure requiring alteration.

Thus, the post-processing subsystem 150 is configured to impart significant amounts of plastic deformation to the newly added material 55. Examples of suitable post-processing subsystems 150 include a shot peening assembly, a hot isostatic pressing assembly, a heat treatment assembly, a laser shock peening assembly, a low plasticity burnishing assembly, a controlled plasticity burnishing assembly, a friction stir processing assembly, and an ultrasonic assembly. One exemplary embodiment utilizes low plasticity burnishing to impart sufficient plastic deformation in a controlled manner and to a sufficient depth to close up voids/pores in the newly added material 55 and to formulate atomic-level bonds between the newly added material 55 and the original forged component substrate 50'.

FIG. 4 schematically illustrates a post-processing subsystem 150 including a low plasticity burnishing assembly. Low plasticity burnishing (LPB) is a technique developed by Lambda Technologies of Cincinnati, Ohio. The LPB assembly includes a fluid bearing tool 152 with a channel through which a supporting fluid 154 flows. A spheroid 156 is mounted on the fluid bearing tool 152 by way of a hydrostatic bearing. The supporting fluid 154 may be a coolant used to pressurize the bearing through its continuous flow. The pressurized bearing supports the spheroid 156 such that it does not contact the mechanical bearing seat (shown in dotted line) of the fluid bearing tool 152. A normal force F_{N} is exerted on the fluid bearing tool 152, which extends through the spheroid 156 and onto the surface of the forged component. Lateral motion M_{L} of the spheroid 156 along the surface of the forged component in a pre-determined pattern, coupled with the normal force F_{N}, allows induction of a residual compression along the surface of the newly added material 55. The newly added material 55, as well as the rest of the surface of the forged component over which the spheroid 156 rolls is left in compression after the post-processing.

Next will be described an example of a heat treatment post-processing technique. The material being exposed to this heat treatment is Inconel® 718 alloy, which is a high-strength, corrosion-resistant nickel chromium material. As is known in the art, factors such as the type of material and desired enhancements directly affect the type of heat treatment that would be the most effective as a post-processing technique. A solution annealing and precipitation hardening technique are used to harden Inconel® 718. The solution annealing is performed at a temperature within the range of 1700 and 1850 °F. The solution annealing is followed by a rapid cooling, usually in water, plus the precipitation hardening at a temperature of approximately 1325 °F for eight hours. This is followed up with a furnace cool to about 1150 °F, at which it is held for a total aging time of 18 hours, followed by air cooling. This heat treatment regimen is useful for the Inconel® 718 alloy where a combination of rupture life, notch rupture life, and rupture ductility is of greatest concern.

Alternatively, the solution annealing may be performed at a temperature range of 1900 and 1950 °F, followed by rapid cooling, usually in water, plus precipitation hardening at approximately 1400 °F for ten hours. Then, it is furnace cooled to 1200 °F at which it is aged for 20 hours, followed by air cooling. This heat treatment regimen is preferred in tensile-limited applications because it produces enhanced transverse ductility, impact strength, and low-temperature notch tensile strength.

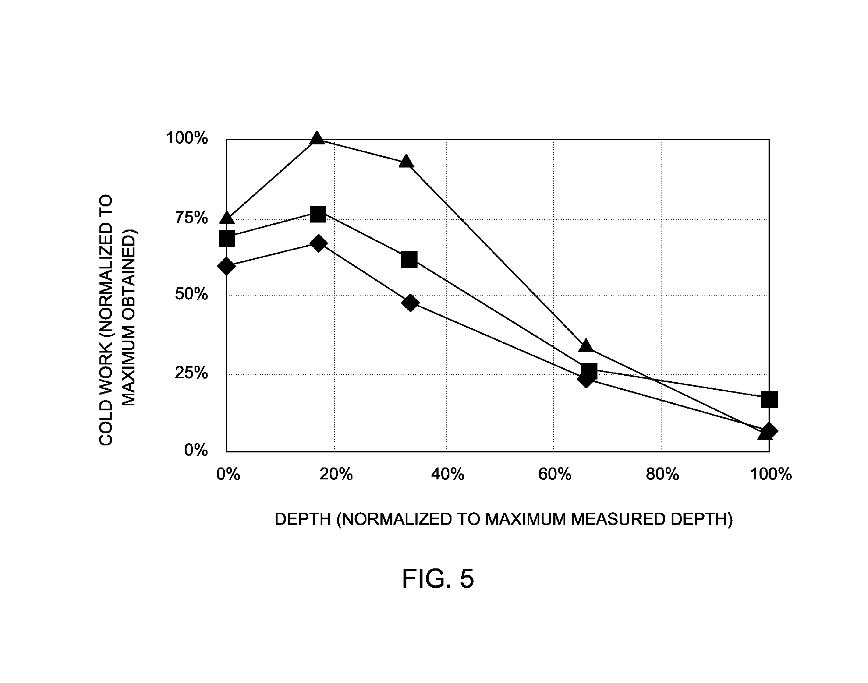

FIG. 5 illustrates percentages of cold work per depth for an alloyed metal sample for a range of processing conditions. Cold work equates to the amount of permanent plastic deformation effected. The alloyed metal sample is Inconel® 706 alloy that was subjected to controlled plastic burnishing. The results have been normalized to the maximum values obtained in the experiments. As shown, the samples showed an amount of deformation between about 65 percent and 100 percent at a depth of approximately 20 percent of the maximum depth measured.

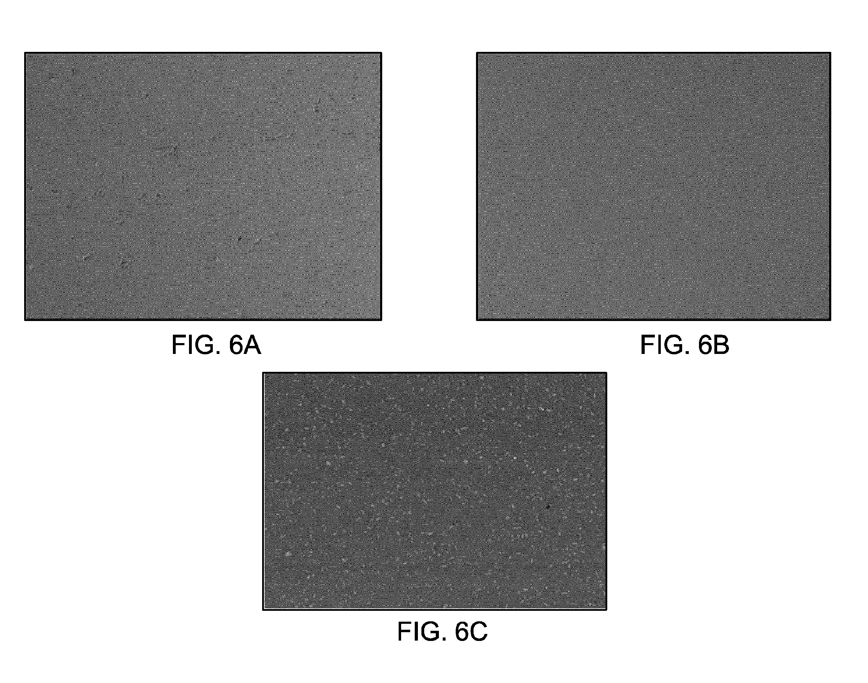

FIGS. 6(A) - (C) depict the microstructure of an alloyed metal sample at various stages of the refurbishment process. FIG. 6(A) provides a depiction of a forged component after cold spraying of a material. As shown, the material has not fully consolidated and numerous voids and pores remain visible. FIG. 6(B) depicts the microstructure of forged component of FIG. 6(A) after a post-processing step of hot isostatic pressing. As shown, the voids and/or pores that were visible in FIG. 6(a) due to lack of full consolidation have been closed up. Finally, FIG. 6(C) depicts the microstructure of post-processed forged component of FIG. 6(B) after an additional post-processing heat treatment. The microstructure shown in FIG. 6(C) is similar in appearance and make up to the microstructure of forged components that have been newly fabricated.

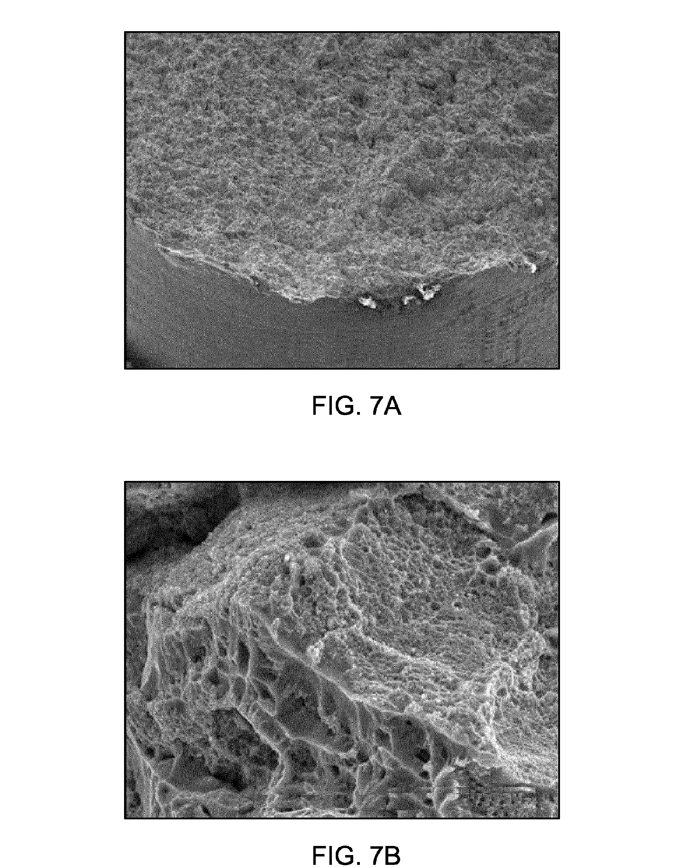

FIGS. 7(A) and 7(B) illustrate the microstructure of a tensile bar formed through cold spraying after having been fractured through tensile forces. The tensile bar was formed through cold spraying and then subjected to a post-processing of hot isostatic pressing and then a heat treatment. After formation and post-processing, the tensile bar was subjected to tensile forces which eventually fractured the bar. FIG. 7(A) illustrates the break surface (rough) as well as the side surface (smooth) of the tensile bar at the point of the break. FIG. 7(B) illustrates, through greater magnification, the ductile (rough fracture) surface at the point of the break of the tensile bar. The presence of such a ductile surface is indicative that a great amount of energy was expended to create the fracture.

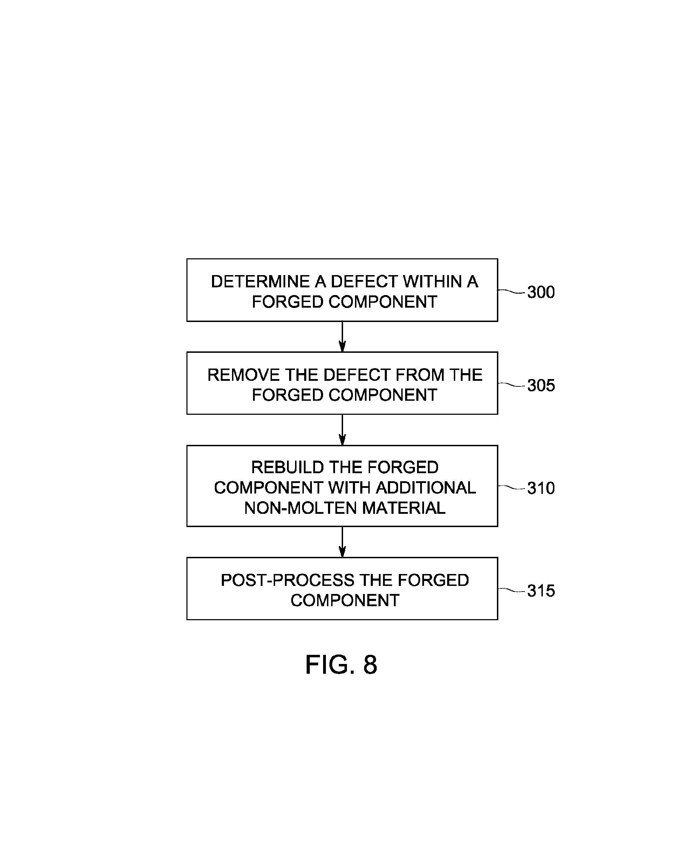

With particular attention to FIG. 8, and more generalized attention to FIGS. 1-4, next will be described a process for refurbishing forged components. At Step 300, a defect is determined within a forged component through, for example, an identification subsystem 110. The identification of a defect may take many forms. For example, defect identification may be performed through the use of one or more still or video cameras or the like to visually memorialize the condition of any particular forged component or portion thereof. Alternatively, a defect may be identified through non-destructive evaluation techniques such as inspection with loupes or optical microscopes, inspection with replicas which are then analyzed under a microscope, fluid penetrant inspection (FPI), eddy current, and/or ultrasonics.

Next, at Step 305, the defect is removed from the forged component through, for example, a material removal subsystem 120. The removal of a defect may be accomplished through grinding and/or milling. Alternatively, the defect may be removed through electric-discharge (EDM) or electro-chemical machining (ECM).

At Step 310, additional non-molten material is added to the forged component to rebuild it. The non-molten material may be added through a rebuilding subsystem 130, such as the spraying assembly described with reference to FIGS. 2 and 3.

Finally, at Step 315, the forged component is post-processed through a post-processing subsystem 150. Examples of suitable post-processing techniques include shot peening, hot isostatic pressing, heat treatment, laser shock peening, low plasticity burnishing, controlled plasticity burnishing, friction stir processing, and ultrasonics.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. For example, while embodiments have been described in terms that may initially connote singularity, it should be appreciated that multiple components may be utilized. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the invention are indicated in the following clauses:
1. A system for refurbishing forged components, comprising:
   an identification subsystem for identifying a forged component for refurbishment;
   a removal subsystem for removing portions of the forged component; and
   a rebuilding subsystem for rebuilding the forged component, the rebuilding subsystem including an assembly for adding a non-molten material to the forged component.
2. The system of clause 1, wherein the assembly comprises a cold spraying assembly.
3. The system of clause 2, wherein the cold spraying assembly comprises:
   a powder feeder;
   a gas pre-heater;
   a powder pre-heater; and
   a converging - diverging nozzle;
   wherein pressurized gas is introduced into the powder feeder and the gas pre-heater and is transmitted through the powder pre-heater and the converging - diverging nozzle to form the non-molten material.
4. The system of clause 2, wherein the assembly comprises a pulsed cold spraying assembly comprising:
   a gas heater for introducing a high pressurized gas;
   a heated hopper for introducing a powder;
   a nozzle for transferring the high pressurized gas and the powder to the forged component.
5. The system of clause 4, wherein the nozzle is bent.
6. The system of clause 1, wherein the rebuilding system comprises at least one from the group consisting of electro-spark deposition (ESD), powder-micro-spark deposition (PMSD) and cold metal transfer.
7. The system of clause 1, wherein the identification subsystem comprises a non-destructive evaluation assembly.
8. The system of clause 7, wherein the non-destructive evaluation assembly comprises an eddy current sensor.
9. The system of clause 1, wherein the removal subsystem comprises at least one from the group consisting of a milling machine, a grinding machine, an abrasive electrical discharge machine assembly, an abrasive electrochemical machine assembly, an abrasive electro-chemical-discharge machine assembly, and an abrasive waterjet machine assembly.
10. The system of clause 1, comprising a post-processing subsystem for providing post-processing to the rebuilt forged component.
11. The system of clause 10, wherein the post-processing subsystem comprises one or more from the group consisting of a shot peening assembly, a hot isostatic pressing assembly, a heat treatment assembly, a laser shock peening assembly, a low plasticity burnishing assembly, a controlled plasticity burnishing assembly, a friction stir processing assembly, and an ultrasonic assembly.
12. A method for refurbishing forged components, comprising:
   identifying a forged component for refurbishment;
   removing a portion of the forged component; and
   rebuilding the forged component through the addition of non-molten material.
13. The method of clause 12, wherein said rebuilding is accomplished without melting the forged component.
14. The method of clause 12, wherein said rebuilding comprises cold spraying.
15. The method of clause 14, wherein said cold spraying comprises cold spraying a material identical in composition to the forged component.
16. The method of clause 14, wherein said cold spraying comprises pulsed cold spraying.
17. The method of clause 12, wherein said identifying comprises non-destructive evaluation.
18. The method of clause 17, wherein said non-destructive evaluation comprises eddy current testing.
19. The method of clause 12, wherein said removing comprises milling, grinding, abrasive electrical discharge machining, abrasive electrochemical machining, abrasive electro-chemical-discharge machining, and abrasive waterjet machining.
20. The method of clause 12, comprising performing post-processing on the rebuilt forged component.
21. The method of clause 20, wherein said post-processing comprises one or more from the group consisting of shot peening, hot isostatic pressing, heat treating, laser shock peening, low plasticity burnishing, controlled plasticity burnishing, friction stir processing, and ultrasonic waves.
22. The method of clause 20, comprising repeating said steps of rebuilding the forged component and performing post-processing on the rebuilt forged component.

## Claims

1. A system (100) for refurbishing forged components (50), comprising:
an identification subsystem (110) for identifying a forged component for refurbishment;
a removal subsystem (120) for removing portions (52) of the forged component; and
a rebuilding subsystem (130) for rebuilding the forged component, the rebuilding subsystem including an assembly for adding a non-molten material to the forged component.

2. The system (100) of claim 1, wherein the assembly (130) comprises a cold spraying assembly.

3. The system (100) of claim 2, wherein the cold spraying assembly (130) comprises:
a powder feeder (134);
a gas pre-heater (136);
a powder pre-heater (138); and
a converging - diverging nozzle (140);
wherein pressurized gas (132) is introduced into the powder feeder and the gas pre-heater and is transmitted through the powder pre-heater and the converging - diverging nozzle to form the non-molten material.

4. The system (100) of claim 2, wherein the assembly comprises a pulsed cold spraying assembly comprising:
a gas heater (232) for introducing a high pressurized gas;
a heated hopper (240, 241) for introducing a powder;
a nozzle (246) for transferring the high pressurized gas and the powder to the forged component.

5. The system (100) of claim 4, wherein the nozzle is bent.

6. The system (100) of any preceding claim, wherein the rebuilding subsystem (130) comprises at least one from the group consisting of electro-spark deposition (ESD), powder-micro-spark deposition (PMSD) and cold metal transfer.

7. The system (100) of any preceding claim, wherein the identification subsystem (110) comprises a non-destructive evaluation assembly.

8. The system (100) of claim 7, wherein the non-destructive evaluation assembly comprises an eddy current sensor.

9. The system (100) of any preceding claim, wherein the removal subsystem (120) comprises at least one from the group consisting of a milling machine, a grinding machine, an abrasive electrical discharge machine assembly, an abrasive electrochemical machine assembly, an abrasive electro-chemical-discharge machine assembly, and an abrasive waterjet machine assembly.

10. The system (100) of any preceding claim, comprising a post-processing subsystem (150) for providing post-processing to the rebuilt forged component.

11. The system (100) of claim 10, wherein the post-processing subsystem (150) comprises one or more from the group consisting of a shot peening assembly, a hot isostatic pressing assembly, a heat treatment assembly, a laser shock peening assembly, a low plasticity burnishing assembly, a controlled plasticity burnishing assembly, a friction stir processing assembly, and an ultrasonic assembly.

12. A method for refurbishing forged components (50), comprising:
identifying (300) a forged component for refurbishment;
removing (305) a portion of the forged component; and
rebuilding (310) the forged component through the addition of non-molten material.
